# EUROPÄISCHE PATENTSCHRIFT

(11) **EP 2 536 797 B1**
(45) Veröffentlichungstag und Bekanntmachung des Hinweises auf die Patenterteilung: **21.06.2017**
(21) Anmeldenummer: 11700157.8
(22) Anmeldetag: 04.01.2011
(51) Int. Cl.: C09J 4/00, C08G 63/688, C09J 5/00

(54) **FUNKTIONSMATERIALIEN MIT REVERSIBLER VERNETZUNG**
FUNCTIONAL MATERIALS WITH REVERSIBLE CROSSLINKING
MATÉRIAUX FONCTIONNELS DOTÉS D'UNE RÉTICULATION RÉVERSIBLE

(30) Priorität: 16.02.2010 DE 102010001987
(43) Veröffentlichungstag der Anmeldung: 26.12.2012
(73) Patentinhaber: Evonik Röhm GmbH, 64293 Darmstadt (DE)
(72) Erfinder: SCHMIDT, Friedrich, Georg, 45721 Haltern am See (DE); KRAUSE, Simon, 63743 Aschaffenburg (DE); HENNIG, Andre, 55218 Ingelheim (DE); HILF, Stefan, 63517 Rodenbach (DE); BARNER-KOWOLLIK, Christopher, 76297 Stutensee (DE); INGLIS, Andrew, John, Blakehurst, NSW 2221 (AU); NEBHANI, Leena, Rajasthan Jaipur 302016 (IN); ALTINTAS, Özcan, 76139 Karlsruhe (DE)
(86) Internationale Anmeldenummer: PCT/EP2011/050043
(87) Internationale Veröffentlichungsnummer: WO 2011/101176

(56) Entgegenhaltungen:
- EP-A1- 2 166 030
- WO-A2-2010/144774
- JP-A- 2000 001 529
- US-A1- 2005 067 373
- US-B2- 6 933 361

## Beschreibung

### Gebiet der Erfindung

Die vorliegende Erfindung betrifft eine neuartige Methode zur reversiblen Vernetzung von beispielsweise Kleb- oder Beschichtungsmassen.
Die reversible Vernetzungsmethode ermöglicht eine sehr schnelle Vernetzung schon bei Raumtemperatur und eine Lösung der Vernetzungsstellen bei höheren Temperaturen, so dass eine thermoplastische Verarbeitbarkeit zurück gewonnen wird und z.B. die ursprünglich verklebten Substrate leicht wieder voneinander getrennt werden können. Dabei ist ein besonderer Aspekt, dass mehrere Zyklen einer Vernetzung und einer Lösung der Vernetzungsstellen mit dem vorliegenden System möglich sind.

### Stand der Technik

Methoden zur reversiblen Vernetzung von Polymeren sind für ein breites Feld von Anwendungen von großem Interesse. Beispielsweise in Klebanwendungen sind diverse Möglichkeiten für die Automobilindustrie oder die Halbleiterindustrie beschrieben. Aber auch bei der Konstruktion von Maschinen, feinmechanischen Geräten oder in der Bauinduistrie sind solche Klebstoffe interessant. Neben Klebanwendungen können reversibel vernetzbare Polymere auch in Dichtstoffen, Beschichtungsmassen wie Lacken oder Farben oder bei der Herstellung von Formkörpern interessant sein.

In DE 198 32 629 und in DE 199 61 940 sind Verfahren beschrieben, bei dem Klebstoffe auf Epoxy-, Harnstoff-, (Meth)acrylat- oder Isocyanatbasis thermisch zersetzt werden. Die Klebstoffformulierung aus DE 199 61 940 enthält dazu eine thermisch instabile Substanz, die bei Erhitzen aktiviert wird. Die Klebschicht in DE 198 32 629 wird durch besonders hohen Energieeintrag zerstört. Die Desaktivierung der Klebschicht ist in beiden Fällen irreversibel.

In US 2005/0159521 bzw. in US 2009/0090461 ist ein Klebsystem beschrieben, das durch Bestrahlung mit aktinischer Strahlung radikalisch vernetzt und durch Ultraschall zerstört wird. Auch dieses Verfahren ist nach einem Klebezyklus irreversibel nicht mehr durchführbar.

In EP 2 062 926 sind in die Ketten eines Polyurethans für Klebanwendungen thermisch labile, sterisch gehinderte Harnstoffgruppen eingebaut, die durch Eintrag thermischer Energie zerstört wird und damit die Klebwirkung ausreichend zur Lösung der Verbindung reduziert wird.

In US 2009/0280330 ist ein wahrscheinlich mehrfach verwendbares Klebsystem beschrieben, das einen Zweischichtaufbau aufweist. Bei einer Schicht handelt es sich um eine Shape-Memory-Schicht, die thermisch flexibel oder gehärtet werden kann. Bei der anderen Schicht handelt es sich um einen Trockenkleber, der unterschiedliche Klebstärken in Abhängigkeit von der Struktur aufweist. Problem eines solchen Systems ist jedoch die aufwendig aufzubauende zweischichtige Struktur und die zu erwartende Restklebrigkeit nach Erhitzen der Shape-Memory-Schicht.

Unter dem Oberbegriff "Click Chemie" werden seit einigen Jahren vor allem in der akademischen Welt Methoden zum Aufbau von Blockcopolymeren erforscht. Dabei werden zwei unterschiedliche Homopolymere mit verknüpfbaren Endgruppen miteinander kombiniert und z.B. mittels einer Diels-Alder-Reaktion, Diels-Alder-analogen Reaktion bzw. einer anderen Cycloaddition miteinander verbunden. Ziel dieser Reaktion ist es, thermisch stabile, lineare und ggf. hochmolekulare Polymerketten aufzubauen. In Inglis et al. (Macromolecules 2010, 43, S.33-36) beispielsweise sind zu diesem Zweck Polymere mit Cyclopentadienylendgruppen, die aus mittels ATRP hergestellten Polymeren erhältlich sind, beschrieben. Diese Cyclopentadiengruppen können sehr rasch in hetero Diels-Alder Reaktionen mit Polymeren reagieren, welche elektronenarme Dithioester als Endgruppen tragen (Inglis et al. Angew. Chem. Int. Ed. 2009, 48, S. 2411-2414).

Die Verwendung von monofunktionellen RAFT-Polymeren zur Verknüpfung mit monofunktionellen Polymeren, die eine Dihydrothiopyran-Gruppe über eine Hetero-Diels-Alder-Reaktion findet sich in Sinnwell et al. (Chem. Comm. 2008, 2052-2054). Mit dieser Methode lassen sich AB-Diblockcopolymere realisieren. Schnelle Varianten dieser Hetero-Diels-Alder-Verknüpfung zur Synthese von AB-Blockcopolymeren mit einer nach einer RAFT-Polymerisation vorliegenden Dithioester-Gruppe und einer Dienyl-Endgruppe sind in Inglis et al. (Angew.Chem.Int.Ed. 2009, 48, S.2411-14) und in Inglis et al. (Macromol. Rapd Commun. 2009, 30, S.1792-98) beschrieben. Die analoge Herstellung von Multiarm-Sternpolymeren findet sich in Sinnwell et al. (J.Pol.Sci.: Part A: Pol.Chem. 2009, 47, S.2207-13).

In US 6,933,361 ist ein System zur Herstellung von einfach reparierbaren, transparenten Formkörpern beschrieben. Das System besteht aus zwei multifunktionellen Monomeren, die mittels einer Diels-Alder-Reaktion zu einem hochdichten Netzwerk polymerisieren. Dabei handelt es sich bei der einen Funktionalität um ein Maleinsäureimid und bei der anderen Funktionalität um ein Furan. Das thermische Schalten eines solchen hochdichten Netzwerks dient zur Reparatur desselbigen. Die Vernetzung findet bei Temperaturen oberhalb von 100 °C statt. Die partielle Rückreaktion bei noch höheren Temperaturen.

Bei Syrett et al. (Polym.Chem. 2010, DOI: 10.1039/b9py00316a) werden Sternpolymere zur Verwendung als Fließverbesserer in Ölen beschrieben. Diese weisen mittels einer reversiblen Diels-Alder-Reaktion steuerbare, selbstheilende Eigenschaften auf. Dazu werden monofunktionelle Polymethacrylatarme mit Polymethacrylaten kombiniert, die in der Mitte der Kette, als Fragment des eingesetzten Initiators über eine in einer reversiblen Diels-Alder-Reaktion verwendbare Gruppe verfügen.

US 2005/067373 sowie auch die EP 2 166 030 offenbaren Diels-Alder-Systeme, basierend auf Furanen und Maleinsäureanhydrid. Die Vernetzung eines solchen Systems erfolgt bei Temperaturen oberhalb von 100 °C. Die Entknüpfung der gebildeten Bindungen erfolgt entsprechend bei noch höheren Temperaturen.

JP 2000 001529 offenbart Mercapto-funktionalisierte Furane, die die Diels-Alder-Vernetzungsreaktion bereits zwischen 50 und 100 °C eingehen. Jedoch liegt auch diese Reaktion noch deutlich über Raumtemperatur.

WO 2010/144774 schließlich offenbart einen reversiblen Diels-Alder-Mechanismus für Klebanwendung. Jedoch muss auch hier für die Vernetzung die Zusammensetzung erhitzt werden. Weiterhin offenbart auch die WO 2010/144774 im Detail ausschließlich die Kombination aus Furanen und Maleinsäureimiden.

### Aufgabe

Aufgabe der vorliegenden Erfindung ist die Bereitstellung einer neuen reversiblen Vernetzungsmethode, die in unterschiedlichen Anwendungen und in einem breiten Formulierungsspektrum einsetzbar ist.

Insbesondere besteht die Aufgabe, eine reversible Vernetzungsmethode zur Verfügung zu stellen, die mehrfach, d.h. mindestens fünfmal ohne großen Eigenschaftsverlust schaltbar ist.

Darüber hinaus besteht die Aufgabe, eine reversible Vernetzungsmethode zur Verfügung zu stellen, die bei geringen Temperaturen sehr schnell aktivierbar ist und unter Bedingungen, die unschädlich für die Formulierung und eventuell beschichtete Substrate sind, wieder deaktivierbar ist.

Weitere nicht explizit genannte Aufgaben ergeben sich aus dem Gesamtzusammenhang der nachfolgenden Beschreibung, Ansprüche und Beispiele.

### Lösung

Gelöst wurden die Aufgaben durch Entwicklung eines neuartigen reversiblen Vernetzungsmechanismus, der unabhängig von den Formulierungsbestandteilen wie Bindemittel für verschiedenartige Polymere einsetzbar ist. Mit dem Mechanismus werden auch neue reversibel vernetzbare Formulierungen zur Verfügung gestellt. Überraschend wurde gefunden, dass die gestellten Aufgaben durch eine Formulierung, die mittels einer Diels-Alder- oder einer Hetero-Diels-Alder-Reaktion vernetzbar ist, gelöst werden können.

Die erfindungsgemäßen reversibel vernetzbare Formulierungen gemäß Ansprüche 1 bis 9 enthalten eine Komponente A, die mindestens zwei dienophile Doppelbindungen aufweist und eine Komponente B, die mindestens zwei Dien-Funktionalitäten aufweist. Zusätzlich muss zumindest eine dieser beiden Komponenten A oder B, mehr als zwei, bevorzugt mindestens drei der jeweiligen Funktionalitäten aufweisen und mindestens eine der Komponenten A oder B liegt als Polymer vor, es handelt sich bei dem Dienophil um eine Verbindung mit einer Kohlenstoff-Schwefel-Doppelbindung, und die Formulierung ist bei Raumtemperatur vernetzbar und die Vernetzung kann bei einer höheren Temperatur zu mindestens 50% wieder rückgängig gemacht werden. Dabei kann es sich bei der Komponente mit mindestens drei Funktionalitäten um ein Polymer und bei der Komponente mit zwei Funktionalitäten um eine niedermolekulare Substanz oder um ein Oligomer handeln. In einer alternativen Ausführungsform handelt es sich bei der Komponente mit mindestens drei Funktionalitäten um ein Oligomer oder um eine niedermolekulare Substanz und bei der Komponente mit zwei Funktionalitäten um ein Polymer. In einer dritten, alternativen Ausführungsform handelt es sich bei beiden Komponenten um Polymere. In weiteren alternativen Ausführungsformen haben beide Komponenten mindestens drei Funktionalitäten, unabhängig davon, welche der beiden Komponenten ein Polymer ist. In einer weiteren Ausführungsform handelt es sich bei beiden Komponenten um Polymere mit mindestens drei Funktionalitäten.

Für den Fall, dass es sich bei den Komponenten A und B jeweils um ein Polymer handelt, kann es sich bei diesen Polymeren verschiedene oder um gleiche, sich nur bezüglich der funktionellen Gruppen unterscheidende, Polymere handeln.
Bei den Polymeren kann es sich um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handeln. Diese Sternpolymere können über 30 Arme aufweisen. Die Zusammensetzung der Arme kann variieren und sich aus verschienden Polymeren zusammensetzen. Auch können diese Arme wiederum Verzweigungsstellen aufweisen. Die Kammpolymere können eine Blockstruktur aufweisen sowie variable Kammarme.

Die im Weiteren verwendete Schreibweise (Meth)acrylate steht für Alkylester der Acrylsäure und/oder der Methacrylsäure.

Ein besonderer Aspekt der Erfindung ist, dass die Formulierung bei Raumtemperatur vernetzbar ist und die Vernetzung bei einer höheren Temperatur zu mindestens 50% wieder rückgängig gemacht werden kann. Es handelt sich bei dem Dienophil um eine Verbindung mit einer Kohlenstoff-Schwefel-Doppelbindung und damit bei der bevorzugten Vernetzungsreaktion um eine Hetero-Diels-Alder-Reaktion. Besonders bevorzugt handelt es sich bei dem Dienophil um einen Dithioester. Ganz besonders bevorzugt ist das Dienophil eine Verbindung mit der Struktur 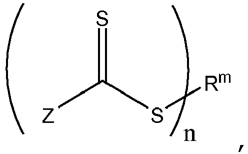 wobei es sich bei Z um eine stark Elektronen-ziehende Gruppe, bei R^{m} um eine mehrbindige organische Gruppe, bevorzugt basierend auf verzweigten oder linearen alkylischen, aromatischen oder einer Kombination aus alkylischen und aromatischen multifunktionalen Alkoholen, multifunktionalen halogenierten Verbindungen, multifunktionalen Carbonsäuren oder multifunktionalen Amine handelt. Alternativ kann es sich bei R^{m} auch um ein Polymer handeln. Die Anzahl der Dithioestergruppen n ist eine Zahl zwischen 2 und 20, bevorzugt zwischen 2 und 10 und besonders bevorzugt zwischen 2 und 4.
In einer bevorzugten Ausführungsform ist die Gruppe Z eine 2-Pyridylgruppe., eine Phosphorylgruppe oder eine Sulfphonylgruppe. Desweiteren kommen in Frage Cyano- oder Trifluoromethylgruppen sowie jede andere Gruppe Z, welche die Elektronendichte der C=S Doppelbindung sehr stark verringert und somit eine rasche Diels-Alder Reaktion erlaubt.

Überraschend wurde gefunden, dass diese Systeme bereits bei Raumtemperatur, unter optionaler Zugabe eines Vernetzungskatalysators, sehr schnell vernetzen. Genauso überraschend wurde gefunden, dass diese Netzwerke bereits bei sehr geringen Temperaturen von z.B. etwas über 80 °C wieder einfach und nahezu vollständig in einen Thermoplasten zurückgeführt werden können. Darüber hinaus wurde sehr überraschend gefunden, dass daraufhin eine erneute Vernetzung, ohne weitere Zugabe von Vernetzer und/oder Katalysator, z.B. durch reines Abkühlen wieder erfolgen kann. Darüber hinaus ist es ein besonders überraschender Effekt, dass diese Zyklen aus Vernetzen und Rücküberführung in einen Thermoplasten mindestens dreimal, bevorzugt mindestens fünfmal ohne einen größeren Eigenschaftsverlust des Netzwerks durchgeführt werden können.

In einer bevorzugten Ausführungsform handelt es sich bei Komponente B um ein mittels Atomtransfer radikalsiche Polymersation (ATRP) hergstelltes, bifunktionelles Polymer. In diesem Fall erfolgt die Funktionalisierung mit den Diengruppen durch eine polymeranalog oder während des Abbruchs durchgeführte Substitution endständiger Halogenatome. Diese Substitution kann beispielsweise durch Zugabe von mit Diengruppen funktionalisierten Mercaptanen erfolgen.

In der gleichen bevorzugten Ausführungsform kann als Komponente A eine niedermolekulare organische Verbindung mit 3 bis 4 Dithioestergruppen, entsprechend der oberen Ausführung eine die Elektronendichte der C=S Doppelbindung stark verringernden Gruppe Z aufweisend, verwendet werden.

Ein weiterer Aspekt der vorliegenden Erfindung ist das Verfahren zur reversiblen Vernetzung. Bei der Durchführung dieses Verfahrens wird eine Formulierung aus zumindest zwei unterschiedlichen Komponenten A und B, mittels einer Diels-Alder- bzw. einer Hetero-Diels-Alder-Reaktion bei Raumtemperatur vernetzt. In einem zweiten Verfahrensschritt werden bei einer höheren Temperatur mindestens 50%, bevorzugt mindestens 90% und besonders bevorzugt mindestens 99% der Vernetzungsstellen mittels einer Retro-Diels-Alder- bzw. einer Retro-Hetero-Diels-Alder-Reaktion wieder gelöst.

Bei Durchführung dieses zweiten Verfahrensschritts werden bei einer Temperatur oberhalb von 80 °C bevorzugt innerhalb von 5 min, höchstens innerhalb von 10 min, mindestens 90 Gew%, bevorzugt mindestens 95 Gew% und besonders bevorzugt mindestens 98 Gew% der Formulierung in einem für die Formulierung vor der Vernetzung geeigneten Lösungsmittel wieder löslich. Die Vernetzung zuvor war derart ausgeprägt, dass bei einem 5minütigem Auswaschen mit dem gleichen Lösungsmittel höchstens 5 Gew%, bevorzugt höchstens 2 Gew% und besonders bevorzugt höchstens 1 Gew% der Formulierung gelöst werden konnten. Der Ausdruck Formulierung und sämtliche damit verbundenen prozentualen Angaben beziehen sich in diesem Fall nur auf die Komponenten A und B. Weitere Formulierungsbestandteile, wie sie zum Beispiel in einer Beschichtungs- oder Klebstoffzusammensetzung zugegeben werden können, sind in dieser Betrachtung nicht berücksichtigt. Im weiteren beschreibt der Ausdruck Formulierung im Rahmen dieser Schrift ausschließlich die Komponenten A und B sowie einen optionalen Vernetzungskatalysator. Der Ausdruck Zusammensetzung dagegen umfasst neben der Formulierung zusätzlich zugegebene Komponenten. Bei diesen zusätzlichen Komponenten kann es sich um spezifisch für die jeweilige Anwendung ausgesuchte Zuschlagsstoffe wie beispielsweise Füllstoffe, Pigmente, Additive, Verträglichkeitsvermittler, Cobindemittel, Weichmacher, Schlagzähmodifier, Verdicker, Entschäumer, Dispergieradditive, Rheologieverbesserer, Haftvermittler, Kratzfestadditive, Katalysatoren oder Stabilisatoren handeln.

Entsprechend der bereits beschriebenen Formulierung werden in dem Verfahren zuerst die Komponenten A und B, sowie optionale weitere Zuschlagsstoffe zusammen gebracht. Bei den Komponenten A und/oder B handelt es sich um zumindest ein Polymere gemäß der weiter oben aufgeführten Auflistung.

Die Vernetzungsreaktion kann bei Raumtemperatur innerhalb von 10 min, bevorzugt innerhalb von 5 min, besonders bevorzugt innerhalb von 2 min und ganz besonders bevorzugt innerhalb von einer Minute erfolgen. Zur Beschleunigung der Vernetzung kann nach dem Vermischen der Komponenten A und B ein Vernetzungskatalysator zugegeben werden. Bei diesen Vernetzungskatalysatoren handelt es sich in der Regel um starke Säuren wie Trifluoressigsäure oder Schwefelsäure oder um starke Lewis-Säuren wie z.B. Bortrifluorid, Zinkdichlorid, Titandichlorid-diisopropylat oder Aluminiumtrichlorid.

In einer alternativen Ausführungsform kann die Vernetzung auch ohne einen Katalysator, z.B. thermisch, beschleunigt werden. Dabei liegt die Aktivierungstemperatur unterhalb der Temperatur, die für die Retro-(Hetero)-Diels-Alder-Reaktion benötigt wird.

In einer weiteren alternativen Ausführungsform enthält die Formulierung unabhängig von der Aktivierung der Vernetzungsreaktion einen weiteren Katalysator, der die Aktivierungstemperatur der Retro-Diels-Alder- bzw. der Retro-Hetero-Diels-Alder-Reaktion absenkt. Bei diesen Katalysatoren kann es sich beispielsweise um Eisen oder eine Eisenverbindung handeln.

Die erfindungsgemäßen Formulierungen bzw. Verfahren können in verschiedensten Anwendungsgebieten zur Verwendung kommen. Die nachfolgende Liste zeigt einige bevorzugte Anwendungsgebiete beispielhaft auf, ohne die Erfindung diesbezüglich in irgendeiner Form einzuschränken. Solche bevorzugten Anwendungsgebiete sind Klebstoffe, Dichtstoffe, Formmassen, Lacke, Farbe, Beschichtungen, Verbundmaterialien oder Tinten.

Bei diesen Tinten handelt es sich beispielsweise um Zusammensetzungen, die thermisch appliziert werden und auf dem Substrat vernetzen. Wenn man leitfähige Oligomere verwendet oder Additive zur Erzeugung einer Leitfähigkeit im Allgemeinen, wird eine elektrisch leitende Tinte erhalten, die z.B. per Bubble-jet - Verfahren verarbeitet werden kann.
Beispiele aus den Anwendungsgebieten Lacke, Beschichtungen und Farbe sind Zusammensetzungen, die z.B. poröse Materialien im entnetzten Zustand besonders gut tränken oder benetzen können und in Folge der Vernetzungsreaktion hochkohärente Materialien ergeben.

Ähnliche Charakteristika sind von Bedeutung für Klebstoffe, die hohe Kohäsion aufweisen sollten und dennoch leicht die Oberflächen der zu klebenden Materialien benetzen sollen. Eine weitere Anwendung im Bereich Kleben ist zum Beispiel eine nur temporär benötigte, später wieder zu lösende Fügung, wie sie in verschiedenen Produktionsprozessen zum Beispiel im Automobilbau oder im Maschinenbau vorkommen kann.
Eine andere denkbare Anwendung ist das Verkleben von Bauteilen, die über die Lebensdauer des gesamten Produktes gesehen eine hohe Austauschwahrscheinlichkeit haben, und daher möglichst einfach und rückstandsfrei wieder zu entfernen sein sollten. Ein Beispiel für eine solche Anwendung ist das Verkleben von Automobilfrontscheiben.

Ein besonderes Beispiel für Kleb- oder Dichtstoffe ist die Verwendung in Lebensmittelverpackungen, die sich beim Aufheizen, beispielsweise in einer Mikrowelle selbsttätig lösen lassen bzw. öffnen.

Ein Beispiel für Anwendungen im Bereich Rapid-Prototyping für die hier beschriebenen vernetzenden und entnetzenden Materialien sind,im Bereich FDM (Fused Deposition Modeling) oder beim 3D-Druck per Ink-jet-Verfahren mit niedrigviskosen Schmelzen zu finden.

### Beispiele

Die gewichtsmittleren Molekulargewichte der Polymere wurden mittels GPC (Gelpermeationschromatographie) bestimmt. Die Messungen wurden mit einer PL-GPC 50 Plus der Firma Polymer Laboratories Inc. bei 30 °C in Tetrahydrofuran (THF) gegen eine Serie von Polystyrolstandards durchgeführt (ca. 200 bis 1·10⁶ g/mol).

Die NMR-Analysen wurden auf einem Bruker AM 400 MHz Spektrometer ausgeführt.

Die ESI-MS-Analysen erfolgten auf einem LXQ Massenspektrometer (ThermoFisher Scientific, San Jose, CA, USA), ausgerüstet mit einer Zerstäuberunterstützten Electrospray Ionisationsquelle gemessen. Das Instrument wurde im m/z Bereich 195-1822 unter Verwendung eines Coffein Standards, Met-Arg-Phe-Ala Acetat (MRFA) und einer Mischung fluorierter Phosphazene (Ultramark 1621) kalibriert (alle von Aldrich). Eine konstante Sprayspannung von 4.5 kV und eine dimensionslose Sweep-Gas Flussrate von 2 und eine dimensionslose Sheath-Gas Flussrate von 12 wurden eigestellt. Die Capillary Spannung der Tube Lens Offset Spannung und die Capillary Temperatur wurden jeweils auf 60 V, 110 V und 275°C eingestellt. Das LXQ wurde mit einem HPLC-System 1200 (Agilent, Santa Clara, CA, USA) bestehend aus einem Entgaser (G1322A), einer binären Pumpe (G1312A) und einem Autosampler (G1367B), gefolgt von einem thermostatisierten Säulenraum (G1316A) betrieben. Die Trennung wurde auf zwei Größenausschlusssäulen (Varian/Polymer Labs, Mesopore 250 x 4.6mm, Partikeldurchmesser 3µm) mit Vorsäule (Mesopore 50 x 4.6mm) bei 30°C durchgeführt. THF mit einer Flussrate von 0.30 mL•min⁻¹ wurde als Eluent verwendet. Das Massenspektrometer wurde parallel zu einem RI-Detektor mit der Säule gekoppelt (G1362A mit SS420x A/D) in einem zuvor beschriebenen Aufbau. 0.27 ml•min⁻¹ des Eluents wurden durch den RI-Detektor geleitet und 30 µL•min⁻¹, in die Electrospray Quelle unter Zugabe einer 100 µM Lösung von Natriumiodid in Methanol bei 20µL durch eine HPLC-Spritzepumpe (Teledyne ISCO, Model 100DM). 20µL einer Polymerlösung mit einer Konzentration von ungefähr 3 mg mL⁻¹ wurden auf das GPC-System aufgegeben.

### Beispiel 1: Synthese von Bis(bromo)-polymethylmethacrylate

50 Äquivalente Methylmethacrylat (MMA), 1 Äquivalent 1,2-Bis(bromoisobutyryloxy)ethan, 0,105 Äquivalente Kupfer(I)bromid, 0,0125 Äquivalente Kupfer(II)bromid und 0,25 Äquivalente 2,2'-Bipyridin werden in einem 1L-Dreihalkskolben mit Magnetrührer, Stickstoffzuleitung und Rückflusskühler vorgelegt. Es wird soviel Aceton zu der Mischung hinzugefügt, dass 500 mL einer 50 %igen (vol.) Lösung vorliegen. Vorhandener Sauerstoff wird durch 40 minütiges Durchleiten von Stickstoff entfernt. Die Mischung wird darauf unter Stickstoff in einem Ölbad auf 50 °C erhitzt. Nach 2 h Polymerisation wird diese durch Abkühlen in einem Eisbad und Zuleiten von Luftsauerstoff abgebrochen. Der Kupferkartalysator wird mittels Filtration über eine kurze Säule, gefüllt mit neutralem Aluminiumoxid, entfernt. Das Brom-terminierte Poly(methylmethacrylat) (PMMA-Br₂) wird zweimal in kaltem Hexan gefällt, dazwischen wird es in wenig Aceton gelöst. Das Molekulargewicht wird mittels GPC (THF) bestimmt: *M*ₙ = 3500 g·mol⁻¹, *PDI* = 1.2.

### Beispiel 2: Synthese von Bis(cyclopentadienyl)-Polymethylmethacrylat:

1 Äquivalent PMMA-Br₂ aus Stufe 1, 12 Äquivalente Natriumjodid, 4 Äquivalente Tributylphosphan und 8 Äquivalente Nickelocen werden in einem 50 mL-Dreihalskolben mit Magnetrührer, Rückflusskühler und Tropftrichter unter Stickstoff in getrocknetem Tetrahydrofuran (THF) gelöst, so dass 25 mL einer bezogen auf das Polymer 0,1-molaren Lösung gebildet werden. Die Lösung wird 12 Stunden bei Raumtemperatur gerührt, die Reaktionslösung wird anschließend säulenchromatographisch über eine kurze, mit basischem Aluminiumoxid gefüllte Säule gereinigt. Das Cyclopentadienyl-terminierte Poly(methylmethacrylat) (PMMA-Cp₂) wird zweimal in kaltem Hexan gefällt. Die zu über 95% erfolgte zweifache Funktionalisierung mit CyclopentadienylGruppen wird mittels ESI-MS nachgewiesen. Die m/z-Werte sind jeweils um ca. 29,6 g mol⁻¹ gegenüber der Messung des Produktes aus Beispiel 1 kleiner.

### Beispiel 3: Synthese des trifunktionellen Vernetzers

Stufe 1: Eine Lösung aus 1,64 g (10 mmol) 2-(Chloromethyl)pyridin-Hydrochlorid (1), 2, 46 g (15 mmol) Natriumphenylsulfinat, 0,53 g (2 mmol) Tetrapropylammoniumbromid, 1,52 g (10 mmol) und 1,8-Diazabicyclo[5.4.0]undec-7-en (DBU) in 10 mL Acetonitril wird für 12 h unter Rückfluss gerührt. Anschließend werden alle flüchtigen Bestandteile wie das Lösungsmittel unter Vakuum entfernt und der Rückstand in wenig Methylenchlorid gelöst. Die Lösung wird mit Natriumchloridlösung ausgeschüttelt, über Magnesiumsulfat getrocknet, filtriert und das Lösungsmittel im Vakuum entfernt. Das Rohprodukt (2) wird in qunatitativen Mengen als weißer Feststoff erhalten und ohne weitere Reinigung in der zweiten Stufe eingesetzt.

Stufe 2 (4-((Pyridin-2-carbonothioylthio)methyl)benzoesäure-hydrochlorid) (3a): Eine Mischung aus 1,9 g (8,51 mmol) der Stufe 1 (2) und 0,78 g (24,3 mmol) Schwefel werden in 10 mL Tetrahydrofuran (THF) unter Verwendung eines Magnetrührers in einem 50 mL Rundkolben gerührt. Nach Zugabe von 2,72 g (24,3 mmol) Kalium-*tert*-butanolat wird die Lösung dunkelbraun. Die Mischung wird bei Raumtemperatur für weitere 12 Stunden gerührt. Daraufhin werden 2,6 g (12,15 mmol) 4-Bromomethylbenzoesäure in 10 mL THF langsam zugetropft. Die Lösung wird für weitere 5 Stunden gerührt. Die Lösung färbt sich in dieser Zeit rötlich-pink. Die Lösung wird in verdünnter Salzsäure extrahiert und mit Methylenchlorid durch ausschütteln gereinigt. Das Rohprodukt (3) wird schließlich durch Extrakion mit Aceton gereinigt.

Stufe 3 (5) : 0,072 g (0,536 mmol) 1,1,1-Tris(hydroxymethyl)propan (TMP, (4)), 0,118 g (0,402 mmol) 4-(Dimethylamino)-pyridinium-4-tosylat (DPTS) und 0,025 g (0,201 mmol) Dimethylaminopyridin (DMAP) werden in 10 mL Methylenchlorid gelöst. 0,581 g (2,01 mmol) des Produktes aus Stufe 2 (3) werden in 3 mL Dimethylformamid (DMF) gelöst und langsam zur Lösung getropft. Nach 10minütigem Rühren werden 0,622 g (3,01 mmol) Dicyclohexylcarbodiimid (DCC), gelöst in 2 mL Dichlormethan zugegeben. Die Reaktionslösung wird über Nacht bei Raumtemperatur gerührt. Die Produktlösung wird filtriert, flüchtige Bestandteile im Vakuum entfernt und das Rohprodukt (5) der Stufe 3 säulenchromatographisch über Silica mit einer Mischung aus Hexan und Ethylacetat (Volumenverhältnis 6 zu 4) gereinigt. Das Produkt (5) wird als roter Feststoff erhalten. Der Nachweis der erfolgreichen Synthese des erwarteten trifunktionellen Vernetzers erfolgte mittels ¹H- bzw. ¹³C-NMR-Spektroskopie und durch ESI-MS-Messungen. Letztere ergaben ein mittleres Molgewicht des Produktes m/zₑₓₚ von 970,08 g·mol⁻¹. Das theoretische Molekulargewicht des Vernetzers m/zₜₕₑₒᵣ beträgt 970,12 g·mol⁻¹.

### Beispiel 4: reversible Vernetzung

Stufe 1: Vernetzungsreaktion: PMMA-Cp₂ aus Beispiel 2 und der trifunktionelle Vernetzer aus Beispiel 3 werden in einem molaren Verhältnis von 2 zu 3 gemischt und in Chloroform gelöst, so dass eine bezogen auf das Polymer 0,05 molare Lösung entsteht. 1,5 Molare Äquivalente Trifluoressigsäure (TFA) werden zugegeben und die Mischung wird bei Raumtemperatur 10 Minuten geschüttelt. Der gebildete Feststoff mittels GPC unmittelbar untersucht. Das Lösungsmittel wird anschließend zusammen mit überschüssigem Vernetzer soweit wie möglich durch Abgießen entfernt.

Stufe 2 Lösung der Vernetzungsstellen: Das vernetzte Polymer aus Stufe 1 wird mit Toluol versetzt und 5 Minuten geschüttelt. Dabei bleibt die Toluolphase farblos. Daraufhin wird 5 Minuten auf über 80 °C erhitzt. In dieser Zeit ist zu beobachten, wie die die farblose Touluolphase sich rosa färbt. Die Farbveränderung ist auf die Freisetzung des trifunktiuonellen Vernetzers zurückzuführen. Dieser ist aus der Toluolphase isolierbar und dünnschichtchromatographisch bzw. mittels NRM-Spektroskopie nachweisbar. Die Lösung wird mittels GPC untersucht.

Stufe 3: zweite Vernetzungsreaktion: Das Toluol aus Stufe 2 wird im Vakuum entfernt und der zurückbleibende Feststoff in Chloroform gelöst. Dass sich der Feststoff nahezu vollständig lösen lässt, ist ein klares Indiz dafür, dass eine nahezu vollständige Entnetzung in Stufe 2 stattgefunden hat. Die Vernetzung wird analog zur ersten Vernetzungsreaktion in Stufe 1 durchgeführt. Analytik des Netzwerks erfolgt wieder mittels unmittelbarer GPC-Messung.

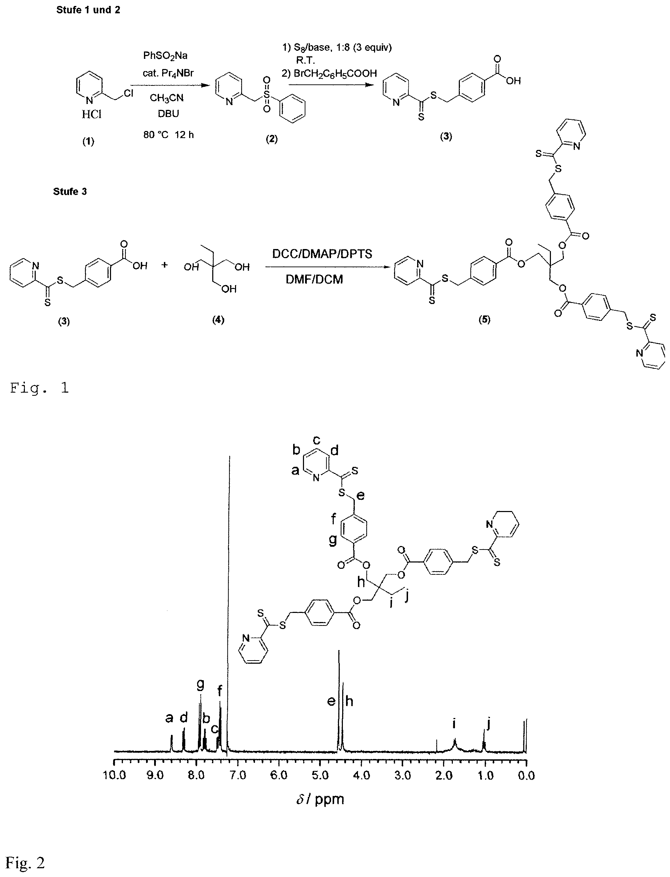

### Die Zeichnungen Fig.1 bis 3

In Fig.1 ist zur besseren Verdeutlichung die Synthese des beispielhaften Vernetzers aus Beispiel 3 dargestellt. Die Bezeichnungen Stufe 1 bis 3 korrespondiert dabei mit dem Beispiel. Die in Klammern dargestellten Nummern finden sich gleichfalls im Beispiel. Darüber hinaus finden sich folgende Abkürzungen finden sich in der Zeichnung:
DBU: 1,8-Diazabicyclo[5.4.0]undec-7-en
(3): (4-((Pyridin-2-carbonothioylthio)methyl)benzoesäure
R.T.: Raumtemperatur
base: Kalium-*tert*-butanolat
DCC: Dicyclohexylcarbodiimid
DMAP: Dimethylaminopyridin
DPTS: 4-(Dimethylamino)-pyridinium-4-tosylat
DMF: Dimethylformamid
DCM: Dichlormethan
Weiterhin sind folgende Verbindungen aufgeführt: PhSO₂Na (Natriumphenylsulfinat); Pr₄NBr
(Tetrapropylammoniumbromid); CH₃CN (Acetonitril); S₈ (Schwefel); BrCH₂C₆H₅COOH (4-Bromomethylbenzoesäure)

In Fig.2 ist das ¹H-NMR-Spektrum des trifuktionellen Vernetzers (5) aus Beispiel 3 abgebildet. Die Buchstaben dienen zur Zuordnung der Signale zu den jeweiligen Protonen des Vernetzers (5).

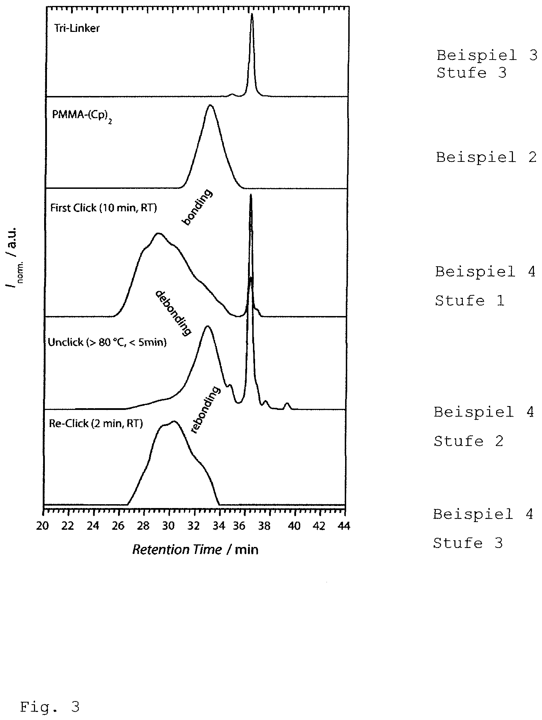

In Fig. 3 finden sich die GPC-Untersuchungen zu den Vernetzungsversuchen, bzw. das GPC-Eluogramm des PMMA-Cp₂ aus Beispiel 2, sowie des trifunktionellen Vernetzers aus Beispiel 3, Stufe 3. Darüber hinaus sind die Vernetzung/Entnetzungsversuche aus Beispiel 4 - Stufe 1 (bonding), Stufe 2 (debonding) und Stufe 3 (rebonding) - abgebildet. Diese Eluogramme zeigen die effiziente reversible Auflösung des Netzwerks und die erneute Vernetzung des Systems.

## Patentansprüche

1. Reversibel vernetzbare Formulierung, **dadurch gekennzeichnet, dass** die Formulierung mittels einer Diels-Alder- oder einer Hetero-Diels-Alder-Reaktion bei Raumtemperatur vernetzbar ist und die Vernetzung bei einer höheren Temperatur zu mindestens 50% wieder rückgängig gemacht werden kann (bestimmt gemäß den in der Beschreibung genannten Analyse- Methoden), dass die Formulierung eine Komponente A enthält, die mindestens zwei dienophile Doppelbindungen aufweist, dass die Formulierung eine Komponente B enthält, die mindestens zwei Dien-Funktionalitäten aufweist,
dass zumindest eine dieser beiden Komponenten A oder B mehr als zwei Funktionalitäten aufweist,
dass mindestens eine der Komponenten A oder B als Polymer vorliegt,
und dass es sich bei dem Dienophil um eine Verbindung mit einer Kohlenstoff-Schwefel-Doppelbindung handelt.

2. Formulierung gemäß Anspruch 1, **dadurch gekennzeichnet, dass** es sich bei dem Dienophil um einen Dithioester handelt.

3. Formulierung gemäß Anspruch 2, **dadurch gekennzeichnet, dass** es sich bei dem Dienophil um eine Verbindung mit der Struktur 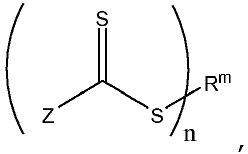 wobei es sich bei Z um eine Elektronen-ziehende Gruppe, bei R^{m} um eine mehrbindige organische Gruppe oder um ein Polymer und bei n um eine Zahl zwischen 2 und 20 handelt.

4. Formulierung gemäß Anspruch 3, **dadurch gekennzeichnet, dass** es sich bei der Gruppe Z um eine 2-Pyridylgruppe und bei n um eine ganze Zahl zwischen 2 und 4 handelt.

5. Formulierung gemäß Anspruch 1, **dadurch gekennzeichnet, dass** es sich bei den Komponenten A und B jeweils um ein Polymer handelt, und dass es sich bei diesen Polymeren um gleiche oder verschiedene Polymere handeln kann.

6. Formulierung gemäß Anspruch 1, **dadurch gekennzeichnet, dass** zumindest eine der beiden Komponenten A oder B mindestens drei Funktionalitäten aufweist.

7. Formulierung gemäß mindestens einem der Ansprüche 1 bis 6, **dadurch gekennzeichnet, dass** es sich bei den Polymeren um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handelt.

8. Formulierung gemäß mindestens einem der Ansprüche 1 bis 7, **dadurch gekennzeichnet, dass** es sich bei Komponente B um ein mittels ATRP hergstelltes, bifunktionelles Polymer handelt, und dass die Funktionalisierung mit den Diengruppen durch Substitution endständiger Halogenatome erfolgte.

9. Formulierung gemäß mindestens einem der Ansprüche 1 bis 8, **dadurch gekennzeichnet, dass** es sich bei der Komponente A um eine niedermolekulare organische Verbindung mit 3 bis 4 Dithioestergruppen gemäß Anspruch 3 handelt, und dass es sich bei der Gruppe Z um eine 2-Pyridylgruppe, eine Phosphorylgruppe oder eine Sulfphonylgruppe handelt.

10. Verfahren zur reversiblen Vernetzung, **dadurch gekennzeichnet, dass** eine
Formulierung aus zumindest zwei unterschiedlichen Komponenten A und B, mittels einer Diels-Alder- bzw. einer Hetero-Diels-Alder-Reaktion bei Raumtemperatur vernetzt wird und bei einer höheren Temperatur mindestens 50% (bestimmt gemäß den in der Beschreibung genannten Analyse- Methoden) der Vernetzungsstellen mittels einer Retro-Diels-Alder- oder einer Retro-Hetero-Diels-Alder-Reaktion wieder gelöst werden, und dass es sich bei Komponente A um eine Verbindung mit einer Kohlenstoff-Schwefel-Doppelbindung handelt.

11. Verfahren gemäß Anspruch 10, **dadurch gekennzeichnet, dass** bei einer Temperatur oberhalb von 80 °C bevorzugt innerhalb von 5 min mindestens 90 % der Formulierung in einem für die Formulierung vor der Vernetzung geeigneten Lösungsmittel wieder löslich sind.

12. Verfahren gemäß zumindest einem der Ansprüche 10 oder 11, **dadurch gekennzeichnet, dass** es sich bei den Komponenten A und/oder B um Polymere gemäß Anspruch 7 handelt.

13. Verfahren gemäß zumindest einem der Ansprüche 10 bis 12, **dadurch gekennzeichnet, dass** die Vernetzung nach dem Vermischen der Komponenten A und B innerhalb von 2 min erfolgt.

14. Verfahren gemäß zumindest einem der Ansprüche 10 bis 13, **dadurch gekennzeichnet, dass** die Vernetzung nach dem Vermischen der Komponenten A und B mit einem Vernetzungskatalysator innerhalb von 2 min erfolgt.

15. Verwendung einer Formulierung gemäß zumindest einem der Ansprüche 1 bis 9 in Klebstoffen, Dichtstoffen, Formmassen, Lacken, Farben, Beschichtungen, Tinten oder Verbundmaterialien.

## Claims

1. Formulation which is reversibly crosslinkable, **characterized in that** the formulation is crosslinkable at room temperature by means of a Diels-Alder reaction or hetero-Diels-Alder reaction and at a higher temperature the crosslinking can be at least 50% undone (determined according to the analysis methods stated in the description),
**in that** the formulation comprises a component A which has at least two dienophilic double bonds,
**in that** the formulation comprises a component B which has at least two diene functionalities,
**in that** at least one of these two components, A or B, has more than two functionalities,
**in that** at least one of the components, A or B, is present as a polymer,
and **in that** the dienophile is a compound having a carbon-sulphur double bond.

2. Formulation according to Claim 1, **characterized in that** the dienophile is a dithioester.

3. Formulation according to Claim 2, **characterized in that** the dienophile is a compound having the structure 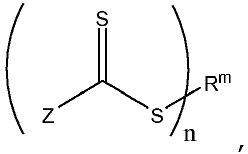 where Z is an electron-withdrawing group, R^{m} is a polyvalent organic group or a polymer, and n is a number between 2 and 20.

4. Formulation according to Claim 3, **characterized in that** the group Z is a 2-pyridyl group and n is a whole number between 2 and 4.

5. Formulation according to Claim 1, **characterized in that** components A and B are each a polymer, and **in that** these polymers may be identical or different polymers.

6. Formulation according to Claim 1, **characterized in that** at least one of the two components, A or B, has at least three functionalities.

7. Formulation according to at least one of Claims 1 to 6, **characterized in that** the polymers are polyacrylates, polymethacrylates, polystyrenes, copolymers of acrylates, methacrylates and/or styrenes, polyacrylonitrile, polyethers, polyesters, polylactic acids, polyamides, polyesteramides, polyurethanes, polycarbonates, amorphous or partially crystalline poly-α-Olefins, EPDM, EPM, hydrogenated or unhydrogenated polybutadienes, ABS, SBR, polysiloxanes and/or block, comb and/or star copolymers of these polymers.

8. Formulation according to at least one of Claims 1 to 7, **characterized in that** component B is a difunctional polymer prepared by means of ATRP and **in that** the functionalization with the diene groups has taken place through substitution of terminal halogen atoms.

9. Formulation according to at least one of Claims 1 to 8, **characterized in that** component A is a low molecular mass organic compound having 3 to 4 dithioester groups according to Claim 3, and **in that** the group Z is a 2-pyridyl group, a phosphoryl group or a sulphonyl group.

10. Process for reversible crosslinking, **characterized in that** a formulation comprising at least two different components A and B is crosslinked by means of a Diels-Alder reaction or hetero-Diels-Alder reaction at room temperature and at a higher temperature at least 50% (determined according to the analysis methods stated in the description) of the crosslinks are undone by means of a retro-Diels-Alder reaction or retro-hetero-Diels-Alder reaction, and **in that** component A is a compound having a carbon-sulphur double bond.

11. Process according to Claim 10, **characterized in that**, at a temperature above 80°C, preferably within 5 minutes, at least 90% of the formulation is soluble again in a solvent suitable for the formulation prior to crosslinking.

12. Process according to at least one of Claims 10 and 11, **characterized in that** components A and/or B are polymers according to Claim 7.

13. Process according to at least one of Claims 10 to 12, **characterized in that** the crosslinking takes place within 2 minutes after the mixing of components A and B.

14. Process according to at least one of Claims 10 to 13, **characterized in that** the crosslinking takes place within 2 minutes after the mixing of components A and B with a crosslinking catalyst.

15. Use of a formulation according to at least one of Claims 1 to 9 in adhesives, sealants, moulding compounds, varnishes, paints, coatings, inks or composite materials.

## Revendications

1. Formulation réticulable de manière réversible, **caractérisée en ce que** la formulation peut être réticulée par une réaction de Diels-Alder ou d'hétéro-Diels-Alder à température ambiante et la réticulation peut être réversée à une température plus élevée à au moins 50 % (déterminé par les méthodes d'analyse indiquées dans la description),
**en ce que** la formulation contient un composant A, qui comprend au moins deux doubles liaisons diénophiles,
**en ce que** la formulation contient un composant B, qui comprend au moins deux fonctionnalités diène,
**en ce qu'**au moins un de ces deux composants A ou B comprend plus de deux fonctionnalités,
**en ce qu'**au moins un des composants A ou B se présente sous la forme d'un polymère,
et **en ce que** le diénophile est un composé contenant une double liaison carbone-soufre.

2. Formulation selon la revendication 1, **caractérisée**
**en ce que** le diénophile est un dithioester.

3. Formulation selon la revendication 2, **caractérisée**
**en ce que** le diénophile est un composé de structure 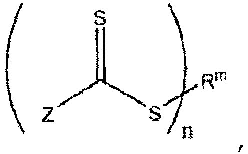 dans laquelle Z est un groupe attracteur d'électrons, R^{m} est un groupe organique polyvalent ou un polymère, et n est un nombre compris entre 2 et 20.

4. Formulation selon la revendication 3, **caractérisée**
**en ce que** le groupe Z est un groupe 2-pyridyle et n est un nombre entier compris entre 2 et 4.

5. Formulation selon la revendication 1, **caractérisée**
**en ce que** les composants A et B sont chacun un polymère, et **en ce que** ces polymères peuvent être des polymères identiques ou différents.

6. Formulation selon la revendication 1, **caractérisée**
**en ce qu'**au moins un des deux composants A ou B comprend au moins trois fonctionnalités.

7. Formulation selon au moins l'une quelconque des revendications 1 à 6, **caractérisée en ce que** les polymères sont des polyacrylates, des polyméthacrylates, des polystyrènes, des copolymères d'acrylates, de méthacrylates et/ou de styrène, le polyacrylonitrile, des polyéthers, des polyesters, des acides polylactiques, des polyamides, des polyester-amides, des polyuréthanes, des polycarbonates, des poly-α-oléfines amorphes ou partiellement cristallines, l'EPDM, l'EPM, des polybutadiènes hydrogénés ou non hydrogénés, l'ABS, le SBR, des polysiloxanes et/ou des copolymères séquencés, en peigne et/ou en étoile de ces polymères.

8. Formulation selon au moins l'une quelconque des revendications 1 à 7, **caractérisée en ce que** le composant B est un polymère bifonctionnel fabriqué par ATRP, et **en ce que** la fonctionnalisation avec les groupes diène a lieu par substitution d'atomes d'halogène terminaux.

9. Formulation selon au moins l'une quelconque des revendications 1 à 8, **caractérisée en ce que** le composant A est un composé organique de faible poids moléculaire contenant 3 à 4 groupes dithioester selon la revendication 3, et **en ce que** le groupe Z est un groupe 2-pyridyle, un groupe phosphoryle ou un groupe sulfonyle.

10. Procédé de réticulation réversible, **caractérisé en ce qu'**une formulation constituée d'au moins deux composants A et B différents est réticulée par une réaction de Diels-Alder ou d'hétéro-Diels-Alder à température ambiante, et au moins 50 % (déterminé par les méthodes d'analyse indiquées dans la description) des emplacements de réticulation sont redissous à une température plus élevée par une réaction de rétro-Diels-Alder ou de rétro-hétéro-Diels-Alder, et **en ce que** le composant A est un composé contenant une double liaison carbone-soufre.

11. Procédé selon la revendication 10, **caractérisé en ce qu'**au moins 90 % de la formulation est de nouveau soluble à une température supérieure à 80 °C, de préférence en 5 minutes, dans un solvant approprié pour la formulation avant la réticulation.

12. Formulation selon au moins l'une quelconque des revendications 10 ou 11, **caractérisée en ce que** les composants A et/ou B sont des polymères selon la revendication 7.

13. Formulation selon au moins l'une quelconque des revendications 10 à 12, **caractérisée en ce que** la réticulation a lieu en 2 minutes après le mélange des composants A et B.

14. Formulation selon au moins l'une quelconque des revendications 10 à 13, **caractérisée en ce que** la réticulation a lieu en 2 minutes après le mélange des composants A et B avec un catalyseur de réticulation.

15. Utilisation d'une formulation selon au moins l'une quelconque des revendications 1 à 9 dans des adhésifs, des agents d'étanchéité, des matériaux de moulage, des vernis, des peintures, des revêtements, des encres ou des matériaux composites.
